# NEW EUROPEAN PATENT SPECIFICATION

(11) **EP 0 414 549 B2**
(45) Date of publication and mention of the opposition decision: **18.08.2004**
(45) Mention of the grant of the patent: 07.12.1994
(21) Application number: 90309273.2
(22) Date of filing: 23.08.1990
(51) Int. Cl.: C11D 17/00

(54) **Liquid cleaning compositions and suspending media**
Flüssige Reinigungsmittelzusammensetzungen und Suspendiermedien
Compositions de nettoyage de liquides et agents de suspension

(30) Priority: 24.08.1989 GB 8919254
(43) Date of publication of application: 27.02.1991
(73) Proprietor: HUNTSMAN INTERNATIONAL LLC, Salt Lake City, Utah 84108 (US)
(72) Inventor: Hawkins, John, Keekle, Cleator Moor, Cumbria CA25 5QY (GB); Nicholson, William John, Halesowen, West Midlands B62 9JH (GB)
(74) Representative: Lawrence, John

(56) References cited:
- EP-A- 0 043 327
- EP-A- 0 125 711
- EP-A- 0 164 501
- EP-A- 0 386 566
- DE-A- 2 538 217
- FR-A- 2 416 261
- GB-A- 2 179 053
- US-A- 3 281 367
- J.Chem. Soc., Faraday Trans. 79, 975-1000 (1983)
- Trans. Faraday Soc., 63, 2839-2845 (1967)
- Anionic Surfactants : Physical chemistry of surfactant action, vol. 11, New York, Dekker, 1981

## Description

### INTRODUCTION

The present invention relates to liquid media, which are capable of suspending particulate solids or dispersed liquids or gases and which are especially useful as cleaning compositions.

The invention is applicable for example to the formulation of liquid dishwashing compositions, hard surface cleaners coal/water slurries and phosphate free laundry detergents and also provides suspending media for other solids such as pesticides, explosives, pigments, ceramics, catalysts or pharmaceuticals.

### DEFINITIONS

The following terms in parenthesis are used herein in the sense hereafter defined unless a contrary meaning is stated or required by the context.

"Functional Material" means any substantially water insoluble solid, liquid or gas which is to be suspended in an aqueous composition in order to perform a useful function when the composition is used. Examples of functional materials include water insoluble builders such as zeolites, silicone antifoam oils, solid pesticides, ceramics, catalysts, pigments, liquified or compressed gases for use as foaming agents, coal and pharmaceuticals.

"Surfactant" is an organic compound having a hydrophilic and a hydrophobic portion, which substantially lowers the surface energy of a water/oil interface when present in relatively low concentrations. "Surfactant", as used herein, includes not only such conventional surfactants as C₆₋₂₀ alkyl benzene sulphonates, alkyl sulphates, alkyl ethoxylates and alkyl trimethylammonium salts, but also such amphiphilic compounds as C₆₋₂₀ fatty alcohols and fatty acids which are not normally classed as surfactants on account of their low solubility, when the latter are solubilised by the presence of a cosurfactant.

"Electrolyte" is used herein to denote those ionic compounds which dissociate at least partially in aqueous solution to provide ions, and which at the concentrations present tend to lower the total solubility (including micellar concentration) of surfactants in such solutions by a "salting out" effect.

References herein to the Electrolyte content or concentration refer to the total dissolved Electrolyte, including any dissolved Functional Material, if such material is also an Electrolyte, but excludes any suspended solid.

"Substantially free from Electrolyte" means containing insufficient Electrolyte to destabilise the suspension. Typically this implies compositions containing less than 0.5%, preferably less than 0.2% e.g. less than 0.1% by weight, based on the weight of the composition, of Electrolytes added as such, other than any "tramp" electrolyte unavoidably present in the surfactant, or in the suspended Functional Material or any dissolved portion of the suspended solid. "Substantially insoluble" means having a solubility in water less than 2% by weight at 20°C, in the case of ionisable compounds or less than 20% preferably less than 10% e.g. less than 5% in the case of non-ionic compounds.

"Bilayer" includes a layer of surfactant approximately two molecules thick, which is formed from two adjacent parallel layers, each comprising surfactant molecules which are disposed such that the hydrophobic portions of the molecules are located in the interior of the Bilayer and the hydrophilic portions are located on its outer surfaces. "Bilayer" is also used herein to include interdigited layers, which are less than two molecules thick. An interdigited layer may be regarded as a Bilayer in which the two layers have interpenetrated allowing at least some degree of overlap between the hydrophobic portions of the molecules of the two layers.

"Spherulite" means a spherical or spheroidal body having dimensions, of from 0.1 to 50 µm. Spherulites may sometimes be distorted into prolate, oblate, pear or dumbell shapes. "Vesicle" means a Spherulite containing a liquid phase bounded by a Bilayer. "Multiple Vesicle" means a Vesicle which contains one or more smaller Vesicles.

"Lamellar Phase" means a hydrated solid, or liquid crystal phase in which a plurality of Bilayers are arranged in a substantially parallel array, separated by layers of water or an aqueous solution, and having a sufficiently regular lattice spacing of from 25 to about 150 nm to be readily detectable by neutron scattering or X-ray diffraction when present as a substantial proportion of a composition. As used herein the expression excludes concentric Multiple Vesicles.

"G" phase refers to a liquid crystal Lamellar Phase, of the type also known in the literature as "neat" phase or "lamellar" phase. The "G" phase for any given surfactant or surfactant mixture normally exists in a narrow range of concentrations. Pure "G" phases can normally be identified by examination of a sample under a polarising microscope, between crossed polarisers. Characteristic textures are observed in accordance with the classic paper by Rosevear, JAOCS Vol. 31 P628 (1954) or in J. Colloid and Interfacial Science, Vol. 20 No. 4, P.500 (1969). "G" phases normally exhibit a repeat spacing of from 50 to 70 nm, in X-ray diffraction or neutron scattering patterns. "Expanded G phase" means a "G" phase with a repeat spacing of 110 to 150 nm.

"Spherical G Phase" means Multiple Vesicles formed from substantially concentric shells of surfactant Bilayer alternating with aqueous phase with a "G" phase or Expanded G phase spacing. Typically conventional G phases may contain a minor proportion of Spherical G Phase.

"Lye" means an aqueous liquid phase containing Electrolyte, which phase separates from, or is Interspersed with, a second liquid phase containing more Active Ingredient and less Electrolyte than the Lye phase.

"Lamellar Composition" means a composition in which a major part of the surfactant is present as a Lamellar Phase, or in which a Lamellar Phase is the principal factor inhibiting sedimentation. "Spherulitic Composition" means a composition in which a major part of the surfactant is present as Spherulites, or which is principally stabilised against sedimentation by a spherulitic surfactant phase.

"Solubility Parameter" is as defined and described in section VII p. 519 of "The Polymer Handbook".

### BACKGROUND

Liquid cleaning preparation often require the presence of suspended solids. For example hard surface scouring creams require the presence of abrasives and effective laundry detergents require cost effective builders, which may be sparingly soluble or insoluble in water. There is also a substantial demand in many fields of activity for fluid systems to disperse a variety of functional materials which may be solid, liquid or gaseous and which are not easily dissolved or dispersed in aqueous media.

In the case of scouring creams and liquid laundry detergents these problems have been solved by utilising the interaction between electrolytes and surfactants to provide solid suspending structures based on thixotropic dispersions or interspersions of surfactant mesophases with aqueous electrolyte solutions.

GB 2,123,846 describes the use of mesophase surfactant interspersed with an electrolyte solution. A different structure, also referred to in GB 2 123 846, and present, although not specifically identified, in formulations exemplified in a number of other publications, comprises an array of spherulites, each having a plurality of concentric shells of surfactant alternating with layers of electrolyte solution. Patent specifications which describe formulations which probably exhibit spherulitic or lamellar structure include:

| | | |
|---|---|---|
| AU 482374 | GB 855679 | US 2920045 |
| AU 507431 | GB 855893 | US 3039971 |
| AU 522983 | GB 882569 | US 3075922 |
| AU 537506 | GB 943217 | US 3232878 |
| AU 542079 | GB 955081 | US 3235505 |
| AU 547579 | GB 1262280 | US 3281367 |
| AU 548438 | GB 1405165 | US 3328309 |
| AU 550003 | GB 1427011 | US 3346503 |
| AU 555411 | GB 1468181 | US 3346504 |
| | GB 1506427 | US 3351557 |
| CA 917031 | GB 1577120 | US 3509059 |
| | GB 1589971 | US 3374922 |
| CS 216492 | GB 2600981 | US 3629125 |
| | GB 2028365 | US 3638288 |
| DE A1567656 | GB 2031455 | US 3813349 |
| | GB 2054634 | US 3956L58 |
| DE 2447945 | GB 2079305 | US 4019720 |
| | | US 4057506 |
| EP 0028038 | JP-A-52-146407 | US 4107067 |
| EP 0038101 | JP-A-56-86999 | US 4169817 |
| EP 0059280 | | US 4265777 |
| EP 0079646 | SU 498331 | US 4279786 |
| EP 0084154 | SU 922066 | US 4299740 |
| EP 0103926 | SU 929545 | US 4302347 |
| FR 2283951 | | |

although in most instances the structures which would have been present in the formulations as described were insufficiently stable to maintain solids in suspension. GB 2153 380 describes the spherulitic structure and methods for preparing a close packed, space filling, structure, sufficiently robust to withstand various forms of shear and temperature stress, but sufficiently mobile to be readily poured. The method requires optimising electrolyte concentrations within close limits.

In our pending British Patent Application No. 89 06234.3 we have described the use of structured surfactant systems for the support of pesticides.

All the foregoing art requires the presence of substantial concentrations of electrolyte, typically around 12%, in order to form a stable supporting structure by interaction with the surfactant.

This does not necessarily represent a problem in formulations where the presence of electrolytes is desired to achieve particular performance criteria e.g. in phosphate, carbonate and/or silicate built detergents.

However the need to incorporate electrolytes represents a significant restriction on the ability to prepare stable formulations for a variety of special purposes for which electrolytes are undesirable. It is known that some surfactants form mobile lamellar mesophases in the absence of electrolyte. The preparation of 'G' phases from certain surfactants and surfactant mixtures has been described, for example in GB 1538 199, GB 1488352, GB 1533 851, GB 2021 141, GB 2013 235, GB 2031 941, GB 2023 637 AND GB 2022 125. In all of these references a lamellar mesophase is formed by a surfactant or mixture of surfactants in the absence of electrolyte within a narrow range of concentrations. Attempts to suspend effective quantities of solid particles, such as builders, in lamellar ("G") mesophases as described in the foregoing references have resulted in the formation of immobile pastes.

### THE INVENTION

We have now discovered that certain surfactants form structured spherulitic systems phases in the substantial absence of electrolyte, which are capable of supporting particulate solids to form mobile suspensions. In particular we have discovered that mixed surfactants having a mean solubility parameter in the range 10 to 12 tend to form spherulitic systems in the absence of added electrolyte and at concentrations typically in the range 8 to 25% by weight.

These suspensions are of value for a variety of applications, such as in automatic dishwashing compositions, hard surface cleaners, phosphate-free laundry detergents and pesticide suspensions.

Our invention therefore provide a mobile liquid composition comprising: water; a mixture of surfactants; and a substantially water-insoluble functional material characterised in that said mixture of surfactants has a mean solubility parameter in the range 10 to 12 and forms a mobile spherulitic phase in water in the absence of electrolyte and at a concentration within the range 8 to 25% of surfactant based on the total weight of said mixture of surfactants and water; said mixture of surfactants being present in a concentration sufficient to form a mobile spherulitic phase in the absence of electrolyte; said substantially water-insoluble functional material being suspended in the composition; said composition being substantially free from electrolyte.

According to a preferred embodiment the surfactant comprises at least one surfactant with a solubility parameter greater than 13 and at least one surfactant with a solubility parameter below 10, the relative proportions being such as to provide a mean solubility parameter for the mixture between 10 and 12

### SURFACTANT

The surfactant system according to the present invention may be any, mixture of surfactants that forms a solid-supporting spherulitic phase in the absence of added Electrolyte.

The surfactants or surfactant mixtures that can be used according to the present invention are typically those that form a 'G' phase at ambient temperature, but, preferably, do not form an M₁ phase. Generally speaking the aqueous surfactant system has a cloud point greater than 30°C, more usually greater than 40°C and preferably greater than 50°C. Aqueous surfactant systems having a cloud point above 60°C are especially suitable. Alternatively or additionally the surfactant may have an inverse cloud point below 30°C, more usually below 20°C, especially below 10°C, preferably below 0°C. Surfactants with an inverse cloud point below -10°C are especially useful. Inverse cloud points are typical of some nonionic surfactants, in which increasing temperature tends to break the hydrogen bonds responsible for hydration of the hydrophilic part of the molecule, thus rendering it less soluble. Normal cloud points are more typical of anionic or cationic surfactants. Mixtures of anionic and nonionic surfactant may show a cloud point and/or an inverse cloud point.

It is usually preferred that the surfactant should be present in a concentration of at least 1% eg at least 3% by weight of the composition more usually above 5%, especially above 8% and preferably above 10%. A typical range of concentrations of the surfactants is from 7 to 50% more usually 10 to 40% preferably 15 to 30%. Other concentration of surfactants which may be used are 1-30% eg 2-15% by weight of the composition.

Concentrations of surfactant above 60% are possible but very unlikely to be commercially viable as suspending media at least for the majority of foreseeable uses of the invention.

Particularly preferred are nonionic and mixed nonionic surfactants, especially mixtures of fatty alcohol ethoxylates and mixtures of fatty alcohol ethoxylates with fatty acid ethoxylates or mixed ethoxylat-ed/propoxylated alcohols and fatty acids ethoxylates. For example mixtures comprising one or more C₁₀ to C₂₀ average fatty alcohols and or fatty acids alkoxylated with from 5 to 15 ethyleneoxy and/or propyleneoxy groups, are especially useful. Other non-ionic surfactant which may be used include alkoxylated alkylphenols, alkoxyated amines, alkoxylated sorbitan or glycerol esters of fatty acids, and alkanolamides such as coconut mono- di-or tri-ethanolamide and mixtures thereof.

Anionic surfactants of particular value include; alkyl benzene sulphonates, especially the lower (e.g. C₁₋₆) amine salts such as isopropylamine C₁₀₋₁₄ alkyl benzene sulphonate, fatty alkyl polyethyleneoxy sulphates, fatty alkyl polyethyleneoxy phosphates, alkyl sulphates, especially ammonium or lower amine salts, sulphosuccinates, sulphosuccinamates, isethionates, taurides, soaps, paraffin sulphonates, olefin sulphonates and ester sulphonates. The cation of the anionic surfactant may, for example, be sodium, potassium or lithium, or less preferably calcium or magnesium, but most preferably an ammonium or a primary, secondary, tertiary or quaternary C₁₋₆ total alkylammonium such as methylammonium, dimethylammonium, trimethylammonium, tetramethylammonium, ethyl ammonium, propylammonium, isopropylammonium, mono ethanolammonium, diethanolammonium or triethanolammonium.

The surfactant may comprise an amine oxide or alkylated amine oxide or an amphoteric surfactant such as a betaine or sulphobetaine.

The surfactant may comprise a cationic surfactant, such as a fatty alkyl tris (lower alkyl) ammonium salt (eg tallowyl trimethyl ammonium chloride) or benzalkonium salt e.g. lauryl benzyl bis methyl ammonium chloride, an amido amine, quaternised amido amine, imidazoline, ethoxylated imidazoline or quaternised imidazoline.

The anion of the cationic surfactant may, for instance, be a halide such as chloride, fluoride or bromide, a methosulphate, or a carboxylate anion such as formate, acetate, citrate or lactate.

Typically when a surfactant is to be used which has a Solubility Parameter greater than 12 it should be mixed with a surfactant having a solubility parameter less than 11 and vice versa, the relative proporations being selected such that the mean solubility parameter of the mixture is between 10 and 12, preferbly between 11 and 12.

A particular feature of the invention is the ability to utilise compounds which on account of their low solubility in water are not usually effective as surfactants and are not usually classified as such but which are useful surfactants in the presence of cosurfactants which may then be used to form spherulitic compositions. Typically such compounds are amphiphiles having a hydrophobic group such as an alkyl, alkenyl or alkaryl group comprising 6 to 22 aliphatic carbon atoms and a polar group such as a hydroxyl, carboxyl, carbonyl, ester, amino, benzylamino, alkylamino, pyridine, amido, nitro, cyano or halo group. Typical examples are fatty alcohols such as octyl, lauryl, cetyl or stearyl alcohol, fatty acids such as decanoic, lauric, stearic, coconut, palmitic or behenic acids, unsaturated acids such as oleic, linoleic or linolenic acids, phenols such as nonyl phenol, halides such as p-chloro-dodecyl benzene, ketones such as dodecyl cyclohexanone, aldehydes such as octanal, amines such as coconut fatty amine, dodecyl dimethylamine, glycerides such as olive oil or glyceryl distearate and heterocyclics such as 4-lauryl pyridine. Typically the amphiphile is less than 1% by weight soluble in water, e.g. less than 0.5% especially less than 0.2% eg. less than 0.1%.

### SUSPENDED MATERIAL

The suspended material may, for example, comprise a water insoluble detergent builder such as a zeolite or a particulate ion exchange resin, an inert abrasive such as calcite, talc or a substantially water insoluble pesticide, catalyst, ceramic, pharmaceutical or pigment or a silicone oil, or substantially water insoluble gas. The particle size is not usually critical. Typically particles of from 1 to 100 microns may be suspended e.g. 5 to 70 micron especially 10 to 50 micron.

The solid may be present in any concentration from 2% to 85% but preferably 10% to 60% especially 15% to 40%.

### STRUCTURE

The surfactant is present in a sufficient concentration to form a stable spherulitic phase. Some surfactants form stable spherulitic structures at concentrations in the range 4 to 20% others require higher concentration in the range 25 to 50% by weight. The spherulitic structure comprises closely packed spherulites each of which comprises concentric bilayer shells of surfactant alternating with water. Typically the successive shells have a repeat spacing of 110 to 150 nm.

The invention is illustrated by the following examples:

### Example 1

An automatic dishwashing composition comprises:

| | % wt/wt |
|---|---|
| Lauric acid 9 mole ethoxylate | 6.6 |
| cetyl/oleyl alcohol 6 mole ethoxylate | 13.3 |
| "WESSALITH" P (Trademark) zeolite | 20 |
| perfume | 0.1 |
| silicone antifoam | 0.2 |
| water | balance |

The product is a pourable, non-sedimenting composition with good dishwashing performance and low foaming characteristics.

### Example 2

An abrasive hard-surface cleaner comprises:

| | % wt/wt |
|---|---|
| cetyl/oleyl alcohol 6 mole ethoxylate | 6.6 |
| lauric acid 9 mole ethoxylate | 1.4 |
| "DURCAL" 15 (Trademark) calcite | 50 |
| perfume | 0.1 |
| water | balance |

The product is a pourable, non-sedimenting cream with good scouring and cleaning properties.

### Example 3

A coal/water slurry comprises:

| | % wt/wt |
|---|---|
| cetyl/oleyl alcohol 6 mole ethoxylate | 2 |
| lauric acid 9 mole ethoxylate | 1 |
| powdered coal | 75 |
| water | balance |

The product was a non-sedimenting pumpable slurry.

### Example 4

A pesticide suspension comprises :

| | % wt/wt |
|---|---|
| isopropylamine C₁₀₋₁₄ alkylbenzene sulphonate | 10 |
| phenmedipham | 20 |
| water | balance |

The product is a pourable non-sedimenting composition.

### Example 5

A pesticide suspension comprises:

| | % wt/wt |
|---|---|
| "EMPICOL" 0216 (Trademark) alkyl ethoxy phosphate ester | 10 |
| phenmedipham | 20 |
| water | balance |

The product is a pourable, non-sedimenting composition.

### Example 6

A pesticide suspension comprises:

| | % wt/wt |
|---|---|
| "EMPICOL" 0216 (Trademark) alkyl ethoxy phosphate ester | 10 |
| mandeb | 20 |
| water | balance |

The product is a pourable, non-sedimenting composition.

### Example 7

Mixtures of lauryl alcohol, triethanolamine dodyecyl benzene sulphonate and water formed spherulitic suspending media at concentrations between 5 and 22% total surfactant and weight ratios of sulphonate to alcohol greater than 4.8:6.2.

### Example 8

Mixtures of water, olive oil and isopropylamine secondary C₁₂ alkyl benzene sulphonate formed spherulitic suspending systems at concentrations between 9 and 21% total surfactant and weight ratios of sulphonate to olive oil greater than 4.5:6.5.

### Example 9

Mixtures of water, octanol and triethanolamine C₁₂ linear alkyl benzene sulphonate formed spherulitic suspending systems at total surfactant concentrations of 5 to 20% by weight and ratios of sulphonate to octanol greater than 5.8 to 4.2.

### Example 10

Mixtures of water, oleic acid and triethanolamine C₁₂ linear alkylbenzene sulphonate at a total surfactant concentration greater than 12% by weight and a weight ratio of sulphonite to acid between 4.5:5.5 and 7:3 formed spherulitic suspending media.

## Claims

1. A mobile liquid composition comprising: water; a mixture of surfactants; and a substantially water insoluble fonctional material **characterised in that** said mixture of surfactants has a means solubility parameter in the range 10 to 12 and forms a mobile spherulitic phase in water in the absence of electrolyte and at a concentration within the range 8 to 25 % of surfactant based on the total weight of said mixture of surfactants and water; said mixture of surfactants being present in a concentration sufficient to form a mobile spherulitic phase in the absence of electrolyte ; said substantially water insoluble functional material being suspended in the composition; said composition being substantially free from electrolyte.

2. A composition according claim 1 wherein the mixture of water and surfactants has a cloud point above 30 °C.

3. A composition according to claim 2 wherein the mixture of surfactants and water has a cloud point greater than 40°C.

4. A composition according to any foregoing claim wherein the mixture of surfactants and water has an inverse cloud point below 30 °C.

5. A composition according to claim 4 wherein the mixture of surfactants and water has an inverse point below 10°C.

6. A composition according to any foregoing claim wherein the surfactant is present in a concentration greater than 5% by weight of the composition.

7. A composition according to any foregoing cfaim wherein the surfactant comprises one or more C₁₀ to C₂₀ average fatty alcohols alkoxylated with from 5 to 15 ethylenoxy and or propyleneoxy groups.

8. A composition according to any foregoing claim wherein the surfactant comprises a C₁₋₆ amine C₁₀₋₁₄ alkyl benzene sulphonate.

9. A composition according to claim 8 wherein said C₁₋₆ amine is isopropylamine or triethanolamine.

10. A composition according to to claim 1 wherein said surfactants have a mean solubility parameter between 11 and 12.

11. A composition according to any foregoing claim comprising a mixture of a surfactant having a solubility parameter greater than 12 and surfactant having a solubility parameter less than 11.

12. A composition according to any foregoing claim comprising a surfactant having a water solubility less than 1% weight and sufficient cosurfactant to solubilise it to the extent of at least 5% by weight.

## Patentansprüche

1. Eine mobile, flüssige Zusammensetzung, enthaltend
- Wasser,
- ein Gemisch aus Tensiden (bzw. oberflächenaktiven Mitteln), und
- ein funktionelles Material, das in Wasser im wesentlichen unlöslich ist,
**dadurch gekennzeichnetes, dass**
- dieses Gemisch aus Tensiden einen mittleren Löslichkeitsparameter im Bereich von 10 bis 12 aufweist und bei einem Tensid-Anteil - bezogen auf das Gesamtgewicht von Tensidgemisch und Wasser - von 8 bis 25 % und in Abwesenheit von Elektrolyt in Wasser eine mobile sphärolithische Phase bildet;
- dieses Gemisch aus Tensiden in einem ausreichenden Anteil vorhanden ist, um in Abwesenheit von Elektrolyt eine mobile sphärolithische Phase zu bilden;
- dieses in Wasser im wesentlichen unlösliche, funktionelle Material in der Zusammensetzung suspendiert ist; und
- diese Zusammensetzung im wesentlichen frei von Elektrolyt ist.

2. Die Zusammensetzung nach Anspruch 1
**dadurch gekennzeichnet, dass**
dieses Gemisch aus Wasser und Tensiden einen Trübungspunkt oberhalb 30 °C aufweist.

3. Die Zusammensetzung nach Anspruch 1
**dadurch gekennzeichnet, dass**
dieses Gemisch aus Wasser und Tensiden einen Trübungspunkt oberhalb 40 °C aufweist.

4. Die Zusammensetzung nach einem der Ansprüche 1 bis 3,
**dadurch gekennzeichnet, dass**
dieses Gemisch aus Tensiden und Wasser einen inversen Trübungspunkt unterhalb 30 °C aufweist.

5. Die Zusammensetzung nach Anspruch 4,
**dadurch gekennzeichnet, dass**
dieses Gemisch aus Tensiden und Wasser einen inversen Trübungspunkt unterhalb 10 °C aufweist.

6. Die Zusammensetzung nach einem der Ansprüche 1 bis 5,
**dadurch gekennzeichnet, dass**
das Tensid in einem Anteil vorhanden ist, der mehr als 5 Gew.-% der Zusammensetzung ausmacht.

7. Die Zusammensetzung nach einem der Ansprüche 1 bis 6,
**dadurch gekennzelchnet, dass**
die Tenside einen oder mehrere, mittlere C₁₀₋₂₀-Fettalkohol(e) enthalten, der/die mit 5 bis 15 Mol Ethylenoxyd-Gruppen und/oder Propylenoxyd-Gruppen pro Mol Fettalkohol alkoxyliert ist/sind.

8. Die Zusammensetzung nach einem der Ansprüche 1 bis 7,
**dadurch gekennzeichnet, dass**
das Tensid aufweist ein C₁₋₆-Amin-C₁₀₋₁₄Alkylbenzol-Sulfonat.

9. Die Zusammensetzung nach Anspruch 8,
**dadurch gekennzeichnet, dass**
das C₁₋₆-Amin Isopropylamin oder Triethanolamin ist.

10. Die Zusammensetzung nach Anspruch 1,
**dadurch gekennzeichnet, dass**
diese Tenside einen mittleren Löslichkeitsparameter zwischen 11 und 12 aufweisen.

11. Die Zusammensetzung nach einem der Ansprüche 1 bis 10,
**dadurch gekennzeichnet, dass**
die Zusammensetzung ein Gemisch aus Tensiden enthält, das einen Löslichkeitsparameter größer 12 aufweist; und
wenigstens ein weiteres Tensid vorhanden ist, das einen Löslichkeitsparameter kleiner 11 aufweist.

12. Die Zusammensetzung nach einem der Ansprüche 1 bis 11,
**dadurch gekennzeichnet, dass**
ein Tensid vorhanden Ist, das in Wasser eine Löslichkeit kleiner 1 Gew.-% aufweist; und
ein Co-Tensid in einer ausreichenden Menge vorhanden ist, um das eigentliche Tensid in Wasser bis zu einer Löslichkeit von wenigstens 5 Gew.-% zu solubilisieren.

## Revendications

1. Composition liquide mobile comprenant : de l'eau, un mélange de tensioactifs, et une matière fonctionnelle essentiellement insoluble **caractérisée en ce que** ledit mélange de tensioactifs possède un paramètre de solubilité moyen se situant dans l'intervalle de 10 à 12 et forme une phase sphérolithique mobile dans l'eau en l'absence d'électrolyte et à une concentration allant de 8 à 25 % de tensioactif basée sur le poids total dudit mélange de tensioactifs et d'eau ; ledit mélange de tensioactifs étant présent à une concentration suffisante pour former une phase sphérolithique mobile en l'absence d'électrolyte ; ladite matière fonctionnelle essentiellement insoluble étant en suspension dans la composition ; ladite composition étant essentiellement exempte d'électrolyte.

2. Composition selon la revendication 1, dans laquelle le mélange d'eau et de tensioactifs possède un point de trouble supérieur à 30 °C.

3. Composition selon la revendication 2, dans laquelle le mélange de tensioactifs et d'eau possède un point de trouble supérieur à 40 °C.

4. Composition selon l'une quelconque des revendications précédentes, dans laquelle le mélange de tensioactifs et d'eau possède un point de trouble inverse inférieur à 30 °C.

5. Composition selon la revendication 4, dans laquelle le mélange de tensioactifs et d'eau possède un point de trouble inverse inférieur à 10 °C.

6. Composition selon l'une quelconque des revendications précédentes, dans laquelle le tensioactif est présent à une concentration supérieure à 5 % en poids de la composition.

7. Composition selon l'une quelconque des revendications précédentes, dans laquelle le tensioactif comprend un ou plusieurs alcools gras moyens en C₁₀ à C₂₀ alcoxylés avec 5 à 15 groupes éthylèneoxy et/ou propylèneoxy.

8. Composition selon l'une quelconque des revendications précédentes, dans laquelle le tensioactif comprend un alkyl(en C₁₀ - C₁₄)benzènesulfonate d'amine en C₁ - C₆.

9. Composition selon la revendication 8, dans laquelle ladite amine en C₁ - C₆ est l'isopropylamine ou la triéthanolamine.

10. Composition selon la revendication 1, dans laquelle lesdits tensioactifs possèdent un paramètre de solubilité moyen compris entre 11 et 12.

11. Composition selon l'une quelconque des revendications précédentes, comprenant un mélange d'un tensioactif possédant un paramètre de solubilité supérieur à 12 et d'un tensioactif avec un paramètre de solubilité inférieur à 11.

12. Composition selon l'une quelconque des revendications précédentes, comprenant un tensioactif présentant une solubilité dans l'eau inférieure à 1 % en poids et un co-tensioactif en concentration suffisante pour le solubiliser jusqu'à au moins 5 % en poids.
